# EUROPÄISCHE PATENTANMELDUNG

(11) **EP 4 412 047 A1**
(43) Veröffentlichungstag der Anmeldung: **07.08.2024**
(21) Anmeldenummer: 23154573.2
(22) Anmeldetag: 01.02.2023
(51) Int. Cl.: H02K 1/32, H02K 15/02, H02K 9/24

(54) **VERFAHREN ZUR HERSTELLUNG EINES BLECHPAKETS UND DIESES BLECHPAKET MIT ZUMINDEST EINEM KÜHLKANAL**

(71) Anmelder: voestalpine Stahl GmbH, 4020 Linz (AT)
(72) Erfinder: Fluch, Ronald, 4020 Linz (AT)
(74) Vertreter: Jell, Friedrich

(57) **Zusammenfassung**

Es werden ein Verfahren zur Herstellung eines Blechpakets (3) und dieses Blechpaket (3) mit zumindest einem Kühlkanal (18), der durch die Lagen (3a, 3b, 3c, 3d) des Blechpakets (3) verläuft, gezeigt. Um am Blechpaket (3) einen gegenüber Leckage mediendichten Kühlkanal (18) zu schaffen, wird vorgeschlagen, dass an mindestens zwei Lagen (3a, 3b, 3c, 3d) jeweils das erste oder zweite Blechteil (2a, 2b) zumindest eine Sicke (9) aufweisen, anhand welcher Sicken (9) die mindestens zwei Lagen (3a, 3b, 3c, 3d) ineinandergreifen, und dass diese Sicken (9) die Kanalaussparung (16) des betreffenden ersten oder zweiten Blechteils (2a, 2b) jeweils vollständig unter Vermeidung eines Einschlusses der Längsachse (L) umlaufen.

## Beschreibung

Die Erfindung handelt von einem Blechpaket, insbesondere für eine elektrische Maschine, mit mehreren übereinander angeordneten Lagen, wobei die Lagen jeweils ein einzelnes erstes Blechteil oder mehrere nebeneinander angeordnete zweite Blechteile aufweisen, mit einer zwischen den Lagen vorgesehenen, insbesondere thermogehärteten, Schmelzklebelackschicht (8), beispielsweise Backlack, die die ersten oder zweiten Blechteile stoffschlüssig und vollflächig miteinander verbindet, und mit zumindest einem Kühlkanal, der durch die Lagen des Blechpakets verläuft, wofür die betreffenden ersten oder zweiten Blechteilen zumindest eine Kanalaussparung aufweisen, wobei der Kühlkanal exzentrisch zu einer durch die Mitte des Blechpakets verlaufenden Längsachse des Blechpakets angeordnet ist.

Eine reduzierte Baugröße samt erhöhter Leistungsdichte bei laminierten Blechpaketen bedarf einer Kühlung mit Kühlflüssigkeit, beispielsweise auch mithilfe von Kühlkanälen durch das Blechpaket - was eine Spaltfreiheit zwischen den Lagen mit je ein einzelnes erstes Blechteil oder mehrere nebeneinander angeordneten zweiten Blechteilen fordert. Hierfür ist es beispielsweise bekannt, gestapelte Blechteile mit einer Schmelzklebelackschicht zwischen den Lagen miteinander zu verkleben. Dennoch können aufgrund von Parameterschwankungen im Paketierverfahren zur Herstellung des Blechpakets unerwünschte Beeinträchtigungen der Eigenschaften an der Schmelzklebelackschicht oder durch andere negative Einflussfaktoren, eine Spaltbildung zwischen den Lagen nicht sicher ausgeschlossen werden - insbesondere nicht, wenn ein hoher Flüssigkeitsdruck am Blechpaket anliegt. Derartige Blechpakete sind daher im Hochleistungsbereich mit intensiver Kühlungsanforderung oftmals nicht verwendbar.

Es ist daher die Aufgabe der Erfindung, ein Blechpaket der eingangs geschilderten Art derart konstruktiv zu verändern, dass dieses standfest einer Flüssigkeitskühlung selbst mit hohem hydraulischen Druck unterworfen werden kann und damit universal einsetzbar ist.

Die Erfindung löst die gestellte Aufgabe durch die Merkmale des Anspruchs 1.

Die Standfestigkeit des Blechpakets gegenüber einem Flüssigkeitsdurchtritt zwischen den Lagen kann verbessert werden, wenn an mindestens zwei Lagen jeweils das erste oder zweite Blechteil zumindest eine Sicke aufweisen, anhand welcher Sicken die mindestens zwei Lagen ineinandergreifen. Zudem umlaufen diese Sicken die Kanalaussparung des betreffenden ersten oder zweiten Blechteils jeweils vollständig unter Vermeidung eines Einschlusses der Längsachse. Durch dieses vollständige Umlaufen kann nämlich beim Stapeln der Blechteile dafür gesorgt werden, dass sich in diesen Bereichen der Sicke zumindest Spaltfreiheit ergibt. Zudem bildet sich dadurch am Blechpaket eine Art Barriere zwischen den Lagen aus - was auch bei spaltfreien Blechpaketen dafür sorgen kann, dass diese noch höheren hydraulischen Drücken standgehalten können, wie dies beispielsweise bei einer Innenkühlung eines Stator- und/oder Rotorblechpakets im Hochleistungsbereich erforderlich ist. Auch können derartige Sicken vorteilhaft mit bekannten Verfahren, wie diese beim Durchsetzfügen bekannt sind, am Blechpaket erzeugt werden.

Vorzugsweise weist je eine Lage des Blechpakets je ein erstes Blechteil auf. Bei der Verwendung von segmentierten Lagen, also Lagen aus mehreren nebeneinander angeordnete zweite Blechteilen, kann eine Dichtmasse, vorteilhaft auf Harzbasis, an den Stoßflächen zwischen den nebeneinander angeordneten zweiten Blechteilen vorgesehen sein, was beispielsweise die Druckbeständigkeit weiter erhöhen kann. Das erfindungsgemäße Blechpaket ist daher nicht nur robust auch bei hohen Hydraulikdrücken verwendbar, sondern auch kostengünstig und reproduzierbar herstellbar.

Vorzugsweise kann die Gefahr einer Störung des Rands des Kühlkanals durch das Blechumformen der Sicke gering bleiben, wenn ein Sickenboden der Sicke mit einem radialen Abstand zur Kanalaussparung von zumindest der Blechdicke des ersten oder zweiten Blechteils verläuft. Vorzugsweise entspricht der radialen Abstand zumindest 5-mal einer Blechdicke des ersten oder zweiten Blechteils.

Um die Mediendichtheit im Nahbereich der Kanalaussparung sicherstellen zu können, entspricht beispielsweise der radialen Abstand höchstens 20-mal der Blechdicke des ersten oder zweiten Blechteils. Hierbei kann bereits ausreichend sein, wenn der radiale Abstand höchstens 12-mal der Blechdicke des ersten oder zweiten Blechteils entspricht. Damit kann sich beispielsweise ein radialer Abstand im Bereich von 1-mal bis 20-mal einer Blechdicke, 1-mal bis 12-mal einer Blechdicke, 5-mal bis 20-mal einer Blechdicke oder 5-mal bis 12-mal einer Blechdicke ergeben.

Vergleichbare Verhältnisse in der Mediendichtheit um die Kanalaussparung herum können erreicht werden, wenn der Sickenboden der Sicke mit einem im Wesentlichen gleichbleibenden radialen Abstand zur Kanalaussparung verläuft. Auch ist dadurch die Standfestigkeit des Kühlkanals gegenüber Leckage weiter verbesserbar.

Die Gefahr, dass die Sicke bei Herstellung nachteilig auf eine Kontur der Kanalaussparung Einfluss nimmt, kann vermindert werden, wenn der Blechabschnitt zwischen Sicke und Kanalaussparung in der Blechebene verläuft.

Verläuft die Kanalachse des Kühlkanals parallel zur Längsachse des Blechpakets, kann sich die Komplexität bei der Herstellung der ineinandergreifenden Sicken verringern - was zu einem kostengünstigeren Blechpaket führen kann.

Vorstehendes ist weiter verbesserbar, wenn die Kanalaussparung gekrümmt verläuft und/oder wenn die Sicke um die Kanalaussparung gekrümmt verlauft.

Dies insbesondere beispielsweise dann, wenn die Sicke und die Kanalaussparung konzentrisch verlaufen.

Alternativ ist vorstellbar, dass die Sicke als Rundsicke, Kastensicke oder Trapezsicke ausgebildet ist. Dies kann auch für eine ausreichend hohe Barrierewirkung gegen den Durchtritt an Flüssigkeit sogen - und zwar selbst bei einem vergleichsweise hohen angelegten hydraulischen Druck.

Vorstellbar ist weiter, dass die Sicken jeweils eine Sickenhöhe im Bereich von größer gleich 0,5-mal bis kleiner gleich 2-mal, insbesondere 1-mal, der Dicke des Blechteils aufweisen. Zudem sind derart ausgebildete Vorsprünge vergleichsweise einfach am Blechteil vorsehbar. Das Blechteil kann beispielsweise eine Dicke von 0,1 bis 1 mm, insbesondere 0,2 bis 0,5 mm aufweisen.

Vorzugsweise beträgt die Blechdicke des ersten oder zweiten Blechteils von 0,1 mm bis 0,35 mm, bevorzugt von 0,2 mm bis 0,3 mm.

Das erfindungsgemäße Blechpaket kann sich insbesondere für eine elektrische Maschine, beispielsweise als Stator oder als Rotor eignen.

Die Erfindung hat sich außerdem die Aufgabe gestellt, ein Verfahren zur Verfügung zu stellen, mit dem reproduzierbar ein Blechpaket mit einem gegenüber Leckage mediendichten Kühlkanal geschaffen werden kann.

Die Erfindung löst die gestellte Aufgabe durch die Merkmale des Anspruchs 13.

Indem in das Blech oder Blechband mehrmals durch eine Blechumformung zumindest eine Sicke eingebracht wird, wobei diese Sicken die Kanalaussparung des betreffenden ersten oder zweiten Blechteils jeweils vollständig unter Vermeidung eines Einschlusses der Längsachse umlaufen, können die Voraussetzungen für eine besonders sichere Barriere gegenüber einem Flüssigkeitsdurchtritt zwischen den Lagen des Blechpakets geschaffen werden. Zudem ist dieser Verfahrensschritt mit vergleichsweise einfachen und auch beim Durchsetzfügen bekannten Umformen auf einfache Weise beim Paketieren von Blechpaketen vorsehbar - was für das Verfahren auch zu Vorteilen in der Handhabung führt. Durch das erfindungsgemäße Verfahren sind daher ohne erheblichen Mehraufwand reproduzierbar Blechpakete zu schaffen, welche standfest einer Flüssigkeitskühlung mit vergleichsweise hohen hydraulischen Drücken standhalten können.

Vorzugsweise wird das Blech oder Blechband mit einer auf beiden Flachseiten vollflächigen, insbesondere thermohärtbaren, Schmelzklebelackschicht, insbesondere Backlack, bereitgestellt, um die Mediendichtheit des Kühlkanals weiter zu verbessern.

In den Figuren ist beispielsweise der Erfindungsgegenstand anhand mehrerer Ausführungsvarianten näher dargestellt. Es zeigen
- Fig. 1: eine schematische Ansicht auf eine Vorrichtung zum Herstellen von Blechpaketen aus ersten oder zweiten Blechteilen,
- Fig. 2: eine vergrößerte Teilansicht auf vier Lagen des Blechpakets nach Fig. 1 und
- Fig. 3: eine teilweise Draufsicht auf das nach Fig. 1 hergestellte Blechpaket mit Lagen aus ersten oder zweiten Blechteilen.

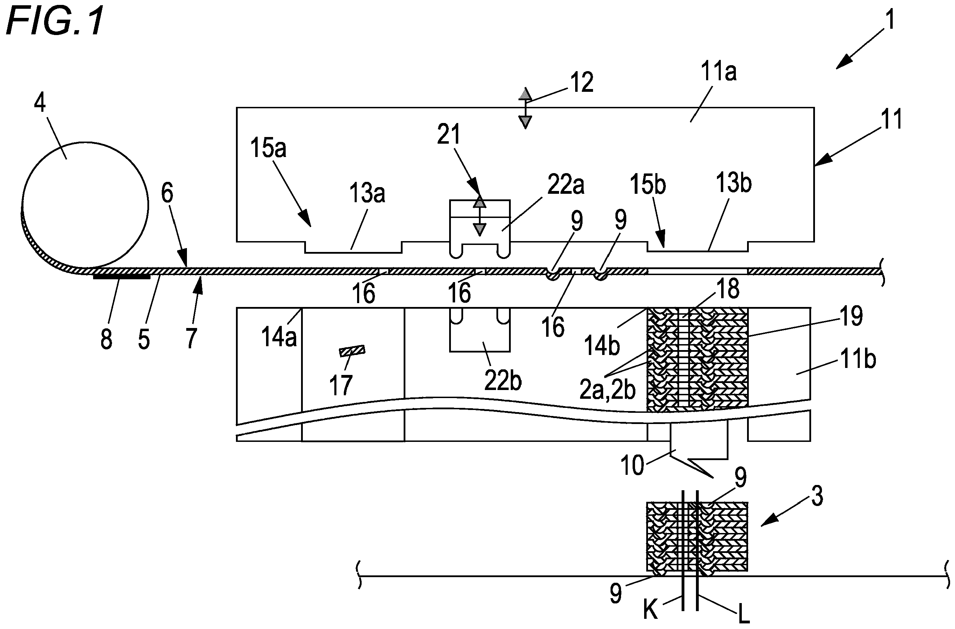

Gemäß dem Ausführungsbeispiel nach Fig. 1 wird eine Vorrichtung 1 zur Durchführung des erfindungsgemäßen Verfahrens schematisch dargestellt. Diese Vorrichtung 1 dient dem Paketieren von Blechpaketen 3 aus laminierten Blechteilen 2a, 2b. Hierzu wird von einem Coil 4 ein Blechband 5, nämlich Elektroband (oder von einem Elektroblech im Falle eines Blechs), abgehaspelt, welches auf einer Flachseite 7 dessen beiden Flachseiten 6, 7 eine vollflächige - in Fig. 1 nur angedeutet dargestellte - Schmelzklebelackschicht 8, nämlich Backlack, im B-Zustand aufweist. Vorstellbar ist, dass auf beiden Flachseiten 6 und 7 eine vollflächige heißhärtende Schmelzklebelackschicht 8, nämlich Backlack, aufgebracht ist - was jedoch nicht dargestellt wurde. Das Blechband 5 weist eine Banddicke von 0,3 mm (Millimeter) auf.

Beispielsweise wird erwähnt, dass solch eine thermisch aktivierbare und damit heißhärtende Schmelzklebelackschicht bzw. (oftmals auch als Schmelzklebstoffschicht genannt) unter der Bezeichnung "Backlack" bekannt ist. Beispielsweise kann der Schmelzklebelack eine Epoxidharzbasis aufweisen. Vorzugsweise handelt es sich beim Schmelzklebelack um ein Bisphenol-basiertes Epoxidharz-System mit einem Härter, beispielsweise mit einer Dicyandiamidbasis. Insbesondere kann es sich beim erwähnten Schmelzklebelack um ein Bisphenol-A-Epichlorhydrinharz-System mit Dicyanamid als Härter handeln. Dieses zweistufig aushärtende Epoxidharz-System befindet sich auf dem Blech oder Blechband im B-Zustand. Damit ist der teilvernetzte Schmelzklebelack reaktionsfähig. Durch Wärmezufuhr reagiert der sich im B-Zustand befindende Schmelzklebelack weiter und kann damit in den vollvernetzten C-Zustand übergeführt werden - was auch als Verbacken oder Endaushärten bezeichnet wird. Typischerweise hat diese teilvernetzte Schmelzklebelackschicht eine Dicke von einigen Mikrometern.

Vom klebstoffbeschichteten Blechband 5 werden mithilfe eines Stanzwerkzeugs 11 - im Ausführungsbeispiel Folgestanzwerkzeugs - mehrere Blechteile 2a, 2b vereinzelt, und zwar freigestanzt. Solch ein Freistanzen kann - im Allgemeinen erwähnt - ein Ausschneiden, Abschneiden, Ausklinken, Beschneiden, Zerteilen durch Ausdrücken etc. sein. Auch ist ein Lasertrennen vorstellbar, was nicht dargestellt ist.

Wie der Fig. 1 weiter zu entnehmen, führt das Stanzwerkzeug 11 ein Schneiden mit mehreren Hüben 12 durch. Hierzu wirken die Schneiden 13a, 13b im Oberwerkzeug 11a des Stanzwerkzeugs 11 mit den jeweiligen Matrizen 14a, 14b des Unterwerkzeugs 11b des Stanzwerkzeugs 11 zusammen und bilden damit im Stanzwerkzeug 11 zwei Stanzstufen 15a, 15b aus.

Mit der ersten Schneide 13a des Oberwerkzeugs 11a wird eine Kanalaussparung 16 in das Blechband 5 eingebracht, nämlich eingestanzt - was an dem ausgestanzten Reststück 17 in Fig. 1 zu erkennen ist. Die Kanalaussparung 16 wird im Blechband 5 für jedes vereinzelte Blechteil 2a, 2b vorgesehen, um damit einen Kühlkanal 18 durch das gesamte Blechpaket 3 zu ermöglichen.

Mit der Schneide 13b wird das Blechteil 2a, 2b vom Blechband 5 vereinzelt - dies mithilfe der Stanzstufe 15b, welche die Blechteile 2a, 2b freistanzt, durch Druck des Oberwerkzeugs 11a in eine Stapeleinrichtung 19 drängt und dort stapelt. Hierzu weist die Stapeleinrichtung 19 eine Führung im Unterwerkzeug 11b auf. Auch ist ein teilweise in Fig. 1 dargestellter Gegenhalter 10 in der Führung vorgesehen.

Die Stapeleinrichtung 19 wird aktiv beheizt, um die Backlackschicht der Blechteile 2a, 2b thermisch zu aktivieren und zwischen den Blechteilen 2a, 2b eine Klebstoffverbindung, also eine stoffschlüssige Verbindung herzustellen. Auf diese Weise wird der Schmelzkleblack 8 verbacken und in den C-Zustand übergeführt, was die Blechteile 2a, 2b zu einem Blechpaket 3 laminiert.

Der Kühlkanal 18 ist exzentrisch zu einer durch die Mitte des Blechpakets 3 verlaufenden Längsachse L des Blechpakets 3 angeordnet, und verläuft damit nicht zentrisch durch das Blechpaket 3. Die Längsachse L ist in den Ausführungsbeispielen die Mittellängsachse des Blechpakets 3, also eine durch die Mitte des Blechpakets 2 verlaufende Längsachse L. Im Ausführungsbeispiel ist diese Längsachse L beispielsweise auch eine Symmetrieachse des Blechpakets. Zentrisch durch das Blechpaket verläuft eine Aufnahme 20 im Blechpaket 3, da das Blechpaket 3 als Rotor für eine elektrische Maschine 100 verwendet wird und die Aufnahme 20 für eine Rotorwelle dient. Es ist aber auch vorstellbar, dass das Blechpaket 3 als Stator verwendet wird, und die Aufnahme 20 dazu vorgesehen ist, einen nicht dargestellten Rotor aufzunehmen.

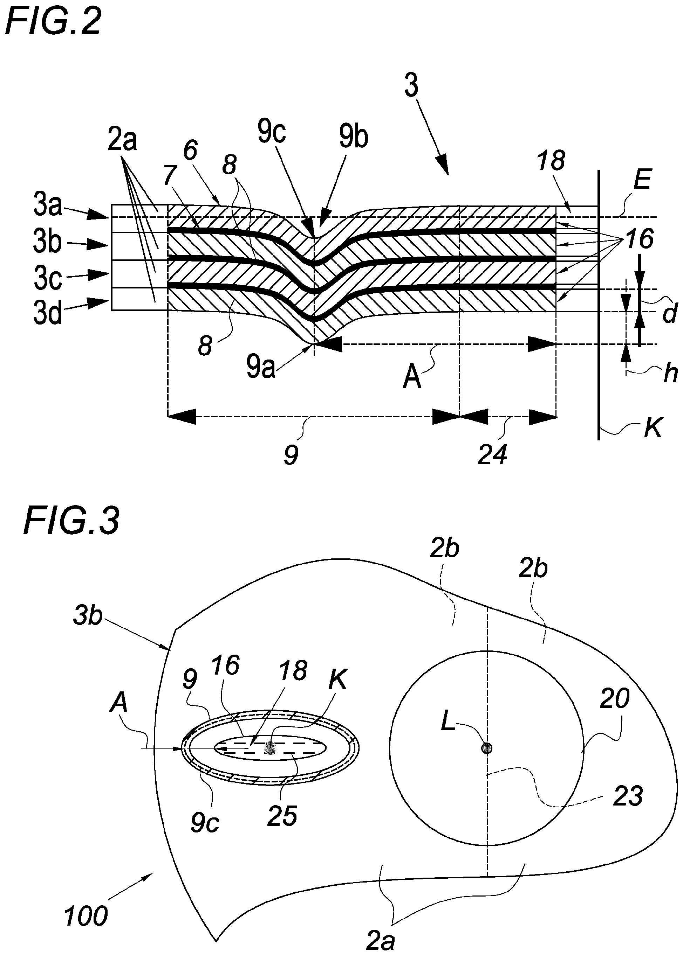

Erfindungsgemäß ist der Kühlkanal 18 in seiner Mediendichtheit verbessert. Dies, indem in das Blechband 5 Sicken 9 durch Blechumformung eingebracht werden. Diese Sicken 9 werden durch Hohlprägen an der Umformstufe 21 mit einem Stempel 22a und einer Matrize 22b erzeugt. Jedes Blechteil 2 eines Blechpakets 3 weist somit aufgrund der Sicke einen Vorsprung und eine Vertiefung 9a, 9b auf. Die vereinzelten Blechteile 2a, 2b werden danach zu einem Blechpaket 3 mit mehreren Lagen 3a, 3b, 3c, 3d derart gestapelt, dass mehrere Lagen 3a, 3b, 3c, 3d des Blechpakets 3 über die Sicken 9 ineinandergreifen - wie speziell in Fig. 2 für erste Blechteile 2a zu erkennen. Hier ist zu erkennen, wie je eine Sicke 9 mit einem Vorsprung 9a an einem Blechteil 2a in eine dazu komplementäre Vertiefung 9b eine Sicke 9 an einem anschließenden Blechteil 2a eingreift.

Diese Sicken 9 sind zudem besonders ausgestaltet - und zwar umlaufen diese Sicken 9 die Kanalaussparung 16 des betreffenden ersten oder zweiten Blechteils 2a, 2b jeweils vollständig unter Vermeidung eines Einschlusses der Längsachse L - wie in Fig. 3 zu erkennen. Die durch die Mitte M des Blechpakets 3 verlaufende Längsachse L geht daher nicht durch die von diesem Umlauf aufgespannte Fläche.

Durch den vollständigen und -wie dargestellt stetigen um den Kanalachse K orientiert verlaufenden - Umlauf sowie durch das Ineinandergreifen der Lagen 3a, 3b, 3c, 3d wird eine Barriere gegenüber einem Flüssigkeitsdurchtritt geschaffen. Das Blechpaket 3 kann daher standfest einer Flüssigkeitskühlung - beispielsweise mit Wasser - und vergleichsweise hohen hydraulischen Drücken ausgesetzt werden. Somit eignet das Blechpaket 3 besonders als Stator oder Rotor, insbesondere wenn kleine Baugröße und hohe elektrische Leistung von einer elektrischen Maschine, wie beispielsweise Elektromotor und/oder -generator, gefordert sind.

Der Umlauf erfolgt auch in ausreichendem radialen Abstand A eines Sickenbodens 9c der Sicke 9 zur Kanalaussparung 18, wie dies in Fig. 3 zu erkennen ist. Der radialen Abstand A beträgt hier 2 mm (Millimeter) bei einer Blechdicke d von 0,3 mm. Damit ist dieser radiale Abstand A stets größer als 5-mal der Blechdicke d, aber keiner als 12-mal oder 20-mal dieser Blechdicke d - was standfest eine Leckage am Kühlkanals 18 vermeidet. Es ist aber auch vorstellbar, dass radialen Abstand A 0,3 mm, also eine Blechdicke d, beträgt, was nicht dargestellt worden ist.

Auch ist in Fig. 3 zu entnehmen, dass der Sickenboden 9c der Sicke 9 mit einem im Wesentlichen gleichbleibenden radialen Abstand A zur Kanalaussparung 16 verläuft. Sicke 9 und Kanalaussparung 16 verlaufen nämlich elliptisch gekrümmt und konzentrisch wie dargestellt. Andere Verläufe, wie beispielsweise kreisrunde Verläufe, sind vorstellbar.

Auch verläuft ein Blechabschnitt 24 zwischen Sicke 9 und Kanalaussparung 16 in der Blechebene E, wie in Fig. 2 dargestellt, um beim Blechumformen eine Beeinträchtigung der Formgenauigkeit des Kühlkanals 18 zu vermeiden.

Nach Fig. 2 und 3 ist jeweils ein erstes Blechteil 2a in einer Lage 3a, 3b, 3c, 3d vorgesehen. Es ist aber auch vorstellbar - wie in Fig. 3 strichliert dargestellt - in einer Lage 3a, 3b, 3c, 3d nebeneinander angeordnete zweite Blechteile 2b, nämlich zwei zweite Blechteile 2b, vorzusehen. An deren strichliert dargestellten Stoßfläche 23 sto-ßen die zweiten Blechteile 2b in der nach Fig. 3 dargestellten Lage 3b aneinander. An der Stoßfläche 23 kann zwischen den zweiten Blechteilen 2b eine nicht dargestellte Dichtmasse auf Harzbasis vorgesehen sein.

Erfindungsgemäß sind unterschiedliche Ausbildungen der Sicken 9 bzw. deren Vorsprünge und Vertiefungen 9a, 9b möglich. Nach Fig. 2a werden die Sicken 9 von einer Rundsicke ausgebildet. Solch eine Rundsicke kann sich (im Vergleich mit einer Kastensicke, Trapezsicke etc.) für eine gleichmäßigere Druckbeaufschlagung des Klebstoffs zwischen den Blechteilen 2a, 2b beim Stapeln auszeichnen.

Als ausreichend in der konstruktiven Ausgestaltung der Sicken 9 hat sich herausgestellt, wenn eine Sickenhöhe h im Wesentlichen gleich der Dicke d des Blechteils 2 aufweisen. In diesem Fall greift ein Blechteil 2a, 2b höchstens in ein daran anschließendes Blechteil 2a, 2b ein - was nicht nur das Blechpaket 3 vereinfacht, sondern auch das Verfahren zum Paketieren erleichtert.

Fig. 3 ist zudem schematisch als Teil einer elektrischen Maschine 100 definiert, bei der eine Kühlflüssigkeit 25 durch den Kühlkanal 18 zur Kühlung des Blechpakets 3 strömt. Das erfindungsgemäße Blechpaket 3 hält einer Flüssigkeitskühlung selbst mit hohem hydraulischen Druck stand und erlaubt damit bei kleinen Abmessungen hohe Leistungsdichten an dieser elektrischen Maschine 100.

Wie zudem den Figuren 2 und 3 zu entnehmen, verläuft der, den gleichbleibenden Abschnitt A bestimmende Blechabschnitt 24 des ersten oder zweiten Blechteils 2a, 2b plan.

Zudem kann in Fig. 2 erkannt werden, dass die Kanalachse K des Kühlkanals 18 parallel zur Längsachse L des Blechpakets 3 verläuft. Nicht dargestellt ist die Ausführungsform, dass die Kanalaussparung 16 kreisrund verläuft und/oder die Sicke 9 kreisringförmig verlaufen. Hierbei ist die Sicke 9 zur Kanalaussparung 16 koaxial angeordnet.

Im Allgemeinen wird festgehalten, dass "insbesondere" als "more particularly" ins Englische übersetzt werden kann. Ein Merkmal, dem "insbesondere" vorangestellt ist, ist als fakultatives Merkmal zu betrachten, das weggelassen werden kann, und stellt damit keine Einschränkung, beispielsweise der Ansprüche, dar. Das Gleiche gilt für "vorzugsweise", ins Englische übersetzt als "preferably".

## Patentansprüche

1. Blechpaket, insbesondere für eine elektrische Maschine,
mit mehreren übereinander angeordneten Lagen (3a, 3b, 3c, 3d), wobei die Lagen jeweils ein einzelnes erstes Blechteil (2a) oder mehrere nebeneinander angeordnete zweite Blechteile (2b) aufweisen,
mit einer zwischen den Lagen (3a, 3b, 3c, 3d) vorgesehenen, insbesondere thermogehärteten, Schmelzklebelackschicht (8), beispielsweise Backlack, die die ersten oder zweiten Blechteile (2a, 2b) stoffschlüssig und vollflächig miteinander verbindet,
und mit zumindest einem Kühlkanal (18), der durch die Lagen (3a, 3b, 3c, 3d) des Blechpakets (3) verläuft, wofür die betreffenden ersten oder zweiten Blechteilen (2a, 2b) zumindest eine Kanalaussparung (16) aufweisen, wobei der Kühlkanal (18) exzentrisch zu einer durch die Mitte des Blechpakets (3) verlaufenden Längsachse (L) des Blechpakets (3) angeordnet ist,
**dadurch gekennzeichnet, dass**
an mindestens zwei Lagen (3a, 3b, 3c, 3d) jeweils das erste oder zweite Blechteil (2a, 2b) zumindest eine Sicke (9) aufweisen, anhand welcher Sicken (9) die mindestens zwei Lagen (3a, 3b, 3c, 3d) ineinandergreifen, und dass
diese Sicken (9) die Kanalaussparung (16) des betreffenden ersten oder zweiten Blechteils (2a, 2b) jeweils vollständig unter Vermeidung eines Einschlusses der Längsachse (L) umlaufen.

2. Blechpaket nach Anspruch 1, **dadurch gekennzeichnet, dass** ein Sickenboden (9c) der Sicke (9) mit einem radialen Abstand (A) von der Kanalaussparung (16) von zumindest einer, insbesondere zumindest 5-mal einer, Blechdicke (d) des ersten oder zweiten Blechteils (2a, 2b) verläuft.

3. Blechpaket nach Anspruch 2, **dadurch gekennzeichnet, dass** der radialen Abstand (A) höchstens 20-mal, insbesondere 12-mal, der Blechdicke (d) des ersten oder zweiten Blechteils (2a, 2b) entspricht.

4. Blechpaket nach Anspruch 1, 2 oder 3, **dadurch gekennzeichnet, dass** der Sickenboden (9c) der Sicke (9) mit einem im Wesentlichen gleichbleibenden radialen Abstand (A) zur Kanalaussparung (16) verläuft.

5. Blechpaket nach einem der Ansprüche 1 bis 4, **dadurch gekennzeichnet, dass** der Blechabschnitt (24) zwischen Sicke (9) und Kanalaussparung (16) in der Blechebene (E) verläuft.

6. Blechpaket nach einem der Ansprüche 1 bis 5, **dadurch gekennzeichnet, dass** die Kanalachse (K) des Kühlkanals (18) parallel zur Längsachse (L) des Blechpakets (3) verläuft.

7. Blechpaket nach einem der Ansprüche 1 bis 6, **dadurch gekennzeichnet, dass** die Kanalaussparung (16) und/oder die Sicke (9) um die Kanalaussparung (16) gekrümmt verläuft oder verlaufen.

8. Blechpaket nach einem der Ansprüche 1 bis 7, **dadurch gekennzeichnet, dass** die Sicke (9) und die Kanalaussparung (16) konzentrisch verlaufen.

9. Blechpaket nach einem der Ansprüche 1 bis 8, **dadurch gekennzeichnet, dass** die Sicke (9) als Rundsicke, Kastensicke oder Trapezsicke ausgebildet ist.

10. Blechpaket nach einem der Ansprüche 1 bis 9, **dadurch gekennzeichnet, dass** die Sicken (9) jeweils eine Sickenhöhe (h) im Bereich von größer gleich 0,5-mal bis kleiner gleich 2-mal, insbesondere 1-mal, der Dicke (d) des Blechteils (2a, 2b) aufweisen.

11. Blechpaket nach einem der Ansprüche 1 bis 10, **dadurch gekennzeichnet, dass** die Blechdicke (d) des ersten und/oder der zweiten Blechteile (2a, 2b) von 0,1 mm bis 0,35 mm, bevorzugt von 0,2 mm bis 0,3 mm, beträgt oder betragen.

12. Elektrische Maschine mit einem Blechpaket (3) nach einem der Ansprüche 1 bis 11 und mit einer Kühlflüssigkeit (25) im Kühlkanal (18) des Blechpakets (3).

13. Verfahren zur Herstellung eines Blechpakets (3), das einen in der Mediendichtheit verbesserten Kühlkanal (18) aufweist, nach einem der Ansprüche 1 bis 11, wobei
ein Blech oder Blechband (5), insbesondere Elektroblech oder Elektroblechband, mit einer auf zumindest einer Flachseite (6, 7) dessen Flachseiten (6, 7) vollflächigen und, insbesondere thermohärtbaren, Schmelzklebelackschicht (8), insbesondere Backlack, bereitgestellt wird,
in das Blech oder Blechband (5) mehrmals durch ein Trennverfahren eine Kanalaussparung (16) sowie durch eine Blechumformung zumindest eine Sicke (9) eingebracht werden,
vom Blech oder Blechband (5) Blechteile (2a, 2b) vereinzelt werden, von denen mehrere erste oder zweite Blechteile (2a, 2b) je mindestens eine Sicke (9) und eine Kanalaussparung (16) aufweisen,
die vereinzelten Blechteile (2a, 2b) zu einem Blechpaket (3) mit mehreren übereinander angeordneten Lagen (3a, 3b, 3c, 3d) derart gestapelt werden, dass mehrere Lagen (3a, 3b, 3c, 3d) des Blechpakets (3) anhand der Sicken (9) der Blechteile (2a, 2b) ineinandergreifenden, wobei die Lagen (3a, 3b, 3c, 3d) jeweils ein einzelnes erstes Blechteil (2a) oder mehrere nebeneinander angeordnete zweite Blechteile (2b) aufweisen, wobei diese Sicken (9) die Kanalaussparung (16) des betreffenden ersten oder zweiten Blechteils (2a, 2b) jeweils vollständig unter Vermeidung eines Einschlusses der Längsachse (L) umlaufen,
und nachfolgend die Schmelzklebelackschicht (8) thermisch aktiviert wird, um die Blechteile (2a, 2b) stoffschlüssig und vollflächig miteinander zum Blechpaket zu verkleben, insbesondere endzuverkleben.

14. Verfahren nach Anspruch 13, **dadurch gekennzeichnet, dass** das Blech oder Blechband (5) mit einer auf beiden Flachseiten (6, 7) vollflächigen, insbesondere thermohärtbaren, Schmelzklebelackschicht (8), insbesondere Backlack, bereitgestellt wird.
